# EUROPÄISCHE PATENTSCHRIFT

(11) **EP 1 392 544 B1**
(45) Veröffentlichungstag und Bekanntmachung des Hinweises auf die Patenterteilung: **04.03.2009**
(21) Anmeldenummer: 01951558.4
(22) Anmeldetag: 05.06.2001
(51) Int. Cl.: B60L 11/18, B60L 11/02

(54) **VERFAHREN ZUR STEUERUNG VON ENERGIEVERSORGERN IN ANTRIEBSSYSTEMEN UND ANTRIEBSSYSTEM**
METHOD FOR CONTROLLING ENERGY PROVIDERS IN DRIVE SYSTEMS AND CORRESPONDING DRIVE SYSTEM
PROCEDE DE COMMANDE DE DISTRIBUTEURS D'ENERGIE DANS DES SYSTEMES D'ENTRAINEMENT ET SYSTEME D'ENTRAINEMENT

(43) Veröffentlichungstag der Anmeldung: 03.03.2004
(73) Patentinhaber: Voith Turbo GmbH & Co. KG, 89522 Heidenheim (DE)
(72) Erfinder: DIETZEL, Bernd, D-89428 Syrgenstein (DE); GRAF, Gottfried, D-73466 Röttingen (DE); QUACK, Wolfgang, D-89547 Gerstetten (DE)
(74) Vertreter: Dr. Weitzel & Partner
(86) Internationale Anmeldenummer: PCT/EP2001/006346
(87) Internationale Veröffentlichungsnummer: WO 2002/098698

(56) Entgegenhaltungen:
- EP-A- 0 460 850
- EP-A- 1 091 437
- US-A- 5 780 981
- US-A- 5 806 617

## Beschreibung

Die Erfindung betrifft ein Verfahren zur Steuerung von Energieversorgem in Antriebssystemen mit mindestens einem Elektromotor zum Antrieb wenigstens eines Rades, im einzelnen mit den Merkmalen aus dem Oberbegriff des Anspruches 1; ferner ein Antriebssystem.

Fahrzeuge mit einem elektromotorischern Antrieb benötigen zum Antreiben Strom. Dieser wird bei einigen bekannten Antriebssystemen zumindest teilweise von einem Energieversorger, wie z.B. einer Brennstoffzelle oder einer anderen Energiequelle erzeugt, und dem Antrieb direkt ohne Pufferung in einer Batterie zugeführt. Dabei besteht das Problem, daß verschiedene aufeinander abgestimmte Sollwerte für den Elektromotor und für den Energieversorger bestimmt und fortlaufend nachgeregelt werden müssen. Der Fahrer eines elektromotorisch angetriebenen Fahrzeugs gibt dabei dem Steuersystem mit einem Fahrpedal als Fahrerwunsch Leistungs- oder Momentenwerte vor. Mittels dieser Leistungs- oder Momentenwerte wird in einem Verfahrensschritt ein Sollwert für die Ansteuerung der elektrischen Fahrmotoren bestimmt. Der Sollwert wird dabei in der Regel auf Drehmomente oder die Leistung, oder dazu analog die Strommenge bezogen. In einem anderen Verfahrensschritt wird ein Sollwert für die Ansteuerung des Energieversorgers bestimmt, um diesen bezüglich z.B. Wirkungsgrad, Verbrauch oder Emissionen optimal zu betreiben. Die Bestimmung der Sollwerte erfolgt nacheinander, wobei der Sollwert für den Energieversorger abhängig von den Bedingungen bestimmt wird, die sich durch die vorherige Bestimmung des Sollwerts für den Antrieb bzw. Elektromotor ergeben.

Zur optimalen Bestimmung dieser Sollwerte wird eine Kennlinie hinterlegt, der die optimalen Betriebspunkte für verschiedene Lastanforderungen des

Antriebs und/oder des Energieversorgungssystems entnehmbar sind. Bei Verbrennungsmotoren ergibt sich eine solche Kennlinie z.B. aus einem zuvor bestimmten Verbrauchs-Kennfeld, in welchem der Verbrauch von elektrischen Verbrauchern, beispielsweise einem Autoradio, nur bedingt berücksichtigt wird. Bei elektromotorisch angetriebenen Fahrzeugen ohne eine ausreichende Pufferung durch eine Batterie können solche Kennlinien auch den Einsatz von Nebenverbrauchern berücksichtigen, beispielsweise einen Kompressor, eine Lichtmaschine oder eine Klimaanlage. Solche wirkungsgradoptimierte Kennlinien ergeben sich aus den Einzelwirkungsgraden der verschiedenen Komponenten und ermöglichen die zeitweilig optimale Bestimmung der Betriebspunkte des gesamten Antriebs- und Energieversorgungssystems in Bezug auf sämtliche Verbraucher einschließlich des Antriebs.

Aus der DE 195 41 575 C2 ist ein Verfahren zur Bestimmung und Steuerung von Sollwerten für ein Elektrofahrzeug bekannt. Dabei wird in einem ersten Schritt vom Fahrerwunsch bzw. von der Pedalstellung ausgehend der Sollwert für die Steuerung von Elektromotoren direkt im Fahrzeugmotor-Wechselrichter bestimmt. Ausgehend von diesem Sollwert wird in einem nachfolgenden Schritt der Sollwert für die Steuerung des Energieversorgungssystems gebildet.

Diese nacheinander erfolgende Bestimmung der Sollwerte verhindert jedoch durch die zwangsläufige Zeitverzögerung und die unterschiedliche Trägheit der einzelnen Systeme eine optimale Ansteuerung bei z.B. Beschleunigungsverfahren. Der Hauptnachteil besteht dabei darin, daß es, wenn sich der Energieerzeuger-Arbeitspunkt nicht mehr auf der optimalen Kennlinie befindet, zum Beispiel durch das plötzliche Hinzu- oder Wegschalten von Nebenverbrauchern oder aus anderen Gründen, eine gewisse Zeit dauert, bis durch geeignete Regeleingriffe am Energieerzeuger wieder ein Arbeitspunkt auf der optimalen Kennlinie eingestellt werden kann.

EP-A-0.460.850 und EP-A-1.091.437 offenbaren Verfahren und Vorrichtungen mit den in den Oberbegriffen der unbhängigen Ansprüsche definierten Merkmale.

Die Aufgabe der vorliegenden Erfindung besteht darin, ein Verfahren und ein Steuersystem für die Ansteuerung eines oder mehrerer Elektromotoren und eines Energieversorgers zu verbessern.

Diese Aufgabe wird durch ein Verfahren mit den Merkmalen des Patentanspruchs 1 bzw. ein Antriebssystem mit den Merkmalen des Patentanspruchs 11 gelöst. Vorteilhafte Ausgestaltungen sind in den Unteransprüchen beschrieben.

Bei einem Verfahren zur Steuerung von Energieversorgem, insbesondere eines Energieversorgers zur Bereitstellung lastabhängiger Leistung für eine Antriebsmaschine in Form eines Elektromotors mittels einer Steuervorrichtung in einem Antriebssystem, bei welchem der Elektromotor entsprechend wenigstens eines, aus wenigstens einer den an einem Betätigungselement vorgebbaren Fahrerwunsch beschreibenden Größe generierten Signales mit Leistung vom Energieversorger gespeist wird und beide, der Elektromotor und der Energieversorger entsprechend optimierter Soll-Kennwerte für die einzustellenden Betriebspunkte im Betriebskennfeld angesteuert werden, wird erfindungsgemäß dahingehend verbessert, daß bei Abweichung der aktuellen Ist-Kennwerte der Betriebspunkte für den Energieversorger von den Optimal-Soll-Kennwerten eine Ansteuerung des Elektromotors oder der Elektromotoren derart erfolgt, daß durch deren veränderte Leistungaufnahme der Energieversorger wieder entsprechend optimierter Kennwerte betrieben wird, wobei diese optimierten Kennwerte vorzugsweise den Optimal-Soll-Kennwerten entsprechen, bei denen der Energieversorger vor der Veränderung des Leistungsbedarfes im Antriebssystem betrieben wurde, und desweiteren eine Sollwertvorgabe entsprechend dem Fahrerwunsch für den Energievesorger vorgenommen wird, um die mechanisch von den Elektromotoren abgebbare Leistung unter Berücksichtigung der im Antriebsstrang anfallenden Verlustleistung wieder an den Fahrerwunsch anzupassen.

Die Sollwertvorgabe für den Energieversorger enstprechend dem Fahrerwunsch für die mechanisch vom Elektromotor oder den Elektromotoren abgebbaren Leistung unter Berücksichtigung der Nebenverbraucher und anfallenden Verlustleistung erfolgt vorzugsweise gleichzeitig mit der Ansteuerung der Elektromotoren, zumindest jedoch spätestens bei wiedererfolgtem Betrieb des Energieversorgers entsprechend optimierter Kennwerte bei veränderter Leistungsaufnahme der Elektromotoren aufgrund der Abweichung durch zu- oder abgeschaltete Verbraucher.

Vorteilhaft ist insbesondere das sofortige Anpassen des Sollwertes für den Elektromotor in Abhängigkeit von der Energiemenge, die vom Energieversorger aktuell unter optimalen Leistungsbedingungen genau abgegeben werden kann. Dadurch wird das im Vergleich zum Energieversorger schnellere Reaktionsvermögen des elektromotorischen Antriebs auf Sollwertänderungen genutzt, um die Arbeitspunktstabilisierung des Energieversorgers- bzw. erzeugers zu verbessern, d.h. den Energieversorger entsprechend optimierter Kennwerte zu betreiben.

Der Begriff Energieversorger steht für Systeme, welche in kombinierten Antriebskonzepten mit Elektromotoren die diesen zuführbare Leistung und eventuell Leistung für Nebenverbraucher bereitstellen.

Die Sollkennwerte für den Energieversorger charakterisieren jeweils einen entsprechenden Betriebspunkt im Arbeitskennfeld des Energieversorgers; bei Verbrennungskraftmaschinen zum Beispiel einen Betriebspunkt im M-n-Diagramm (Momenten-Drehzahl-Diagramm).

Unter der von der Antriebsmaschine bzw. dem Energieversorger abgebbaren Leistung wird die Summe der Leistungsanteile aus Verlustleistung, Antriebsleistung für Nebenverbraucher und tatsächlich von den Elektromotoren an die Räder abgebbarer mechanischer Leistung verstanden. Die vom Elektromotor oder den Elektromotoren aufnehmbare Leistung ist der Leistungsanteil, welcher sich aus der tatsächlich mechanisch vom Elektromotor abgebbaren Leistung unter Berücksichtigung der am Elektromotor auftretenden Verluste zusammensetzt. Die tatsächlich mechanisch von den Elektromotoren abgegebene Leistung entspricht der zum Antrieb der Räder erforderlichen unter Berücksichtigung der Verluste bei Übertragung. D.h., die mechanisch von den Elektromotoren abgebbare Leistung ist nahezu gleich der Fahrleistung.

Vorteilhaft ist insbesondere die Umsetzung der im Rahmen der vorliegenden Entwicklung festgestellten Erkenntnis, daß auch die derzeit gebräuchlichen Energieerzeuger bezüglich ihrer Arbeitspunkteinstellung ein gegenüber Elektromotoren wesentlich trägeres Regelverhalten aufweisen. Als Energieversorger finden primär Verbrennungskraftmaschinen oder Brennstoffzellen Verwendung.

Unter einem weiteren Aspekt der Erfindung wird die Korrekturmöglichkeit durch Änderung der mechanischen Leistungsabgabe durch die Elektromotoren aus Stabilitätsgründen begrenzt. Diese Begrenzung kann dabei beispielsweise auf einen relativen Anteil des jeweils aktuellen Sollwertes oder einen vorgebbaren Grenzwert erfolgen. Andere Möglichkeiten sind ebenfalls denkbar.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung ein Fahrzeug mit einem Antriebssystem, insbesondere einem dieselelektrischen Antriebssystem;
- Figur 2: verdeutlicht anhand eines Signalflußbildes das erfindungsgemäße Verfahren zur Steuerung der über das Energieversorger bereitgestellten Leistung.

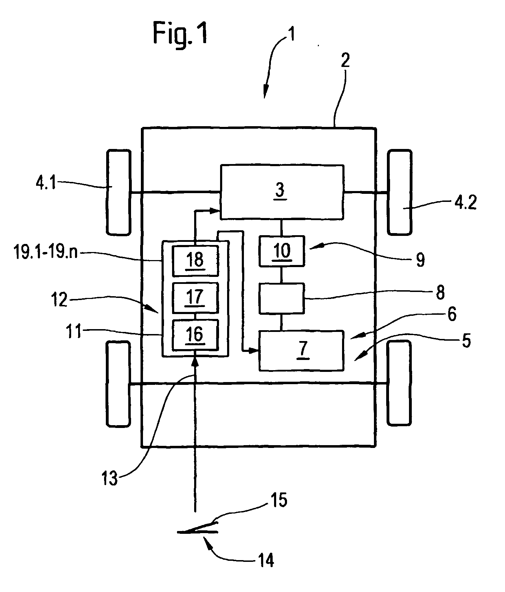

Figur 1 verdeutlicht in schematisch vereinfachter Darstellung ein Antriebssystem 1 für ein Fahrzeug 2. Das Antriebssystem 1 umfaßt mindestens einen, wenigstens mittelbar, d.h. entweder direkt oder über weitere leistungsübertragende und Drehzahl-/Drehmoment wandelnde Einheiten, mit den anzutreibenden Rädern 4.1 bis 4.n koppelbaren Elektromotor 3 und mindestens einen, dem Elektromotor 3 zugeordneter Energieversorger 5. Bei der in der Figur 1 dargestellten Ausführung ist ein Elektromotor 3 vorgesehen, welcher dem Antrieb der Räder 4.1 und 4.2 dient. Denkbar sind jedoch auch andere Ausführungen, beispielsweise in Form eines Einzelradantriebes durch Zuordnung jeweils eines Elektromotors 3.1 bis 3.n zu einem Rad 4.1 beziehungweise 4.n. Bezüglich der Ausführung des Energieversorgers 5, welcher als Energiequelle 6 anzusehen ist, bestehen ebenfalls eine Mehrzahl von Möglichkeiten. Bei Ausführung des Antriebssystems 1 als dieselelektrisches Antriebssystem umfaßt dieses, wie in der Figur dargestellt, eine Verbrennungskraftmaschine 7 als Energiequelle 6, welche mit einer als Generator betreibbaren elektrischen Maschine 8 verbunden ist. Die als Generator betreibbare elektrische Maschine 8 ist elektrisch mit dem Elektromotor 3 zum Antrieb der Räder 4.1 bis 4.n verbunden. Die elektrische Kopplung 9 umfaßt dabei mindestens einen Spannungszwischenkreis 10, welcher vorzugsweise als Gleichspannungszwischenkreis ausgeführt ist. Die Einspeisung der Leistung aus dem Spannungszwischenkreis in den Elektromotor 3 beziehungsweise in die Elektromotoren 3.1-3.n erfolgt über entsprechende Wechselrichtereinheiten. Bei Ausführung der Energiequelle 6 als Brennstoffzelle oder Batterie wird die elektrische Leistung direkt dem Elektromotor 3 beziehungsweise den Elektromotoren 3 zur Verfügung gestellt.

Zur Steuerung der einzelnen Elemente des Antriebssystems 1 - dem Elektromotor 3 und/oder dem Energieversorger 5 - ist diesen eine Steuervorrichtung 11 zugeordnet. Die Steuervorrichtung 11 umfaßt mindestens eine Steuereinrichtung 12. Dabei wird unter Steuereinrichtung die bauliche Komponente Steuergerät verstanden, welche auch als ECU bezeichnet wird, während Steuervorrichtung neben der Steuereinrichtung 12 alle Verbindungen zwischen den Einrichtungen zur Erzeugung bzw. Generierung von Eingangssignalen für die Steuereinrichtung 12 und den über die Steuereinrichtung 12 anzusteuernden Aktoren, in der Regel in Form von Stelleinrichtungen umfaßt. Die Steuereinrichtung 12 weist wenigstens einen Eingang 13 auf, welcher mit einer Einrichtung zur Vorgabe eines Fahrerwunsches bezüglich des gewünschten Fahrverhaltens gekoppelt ist. Die Einrichtung 14 ist dabei als von Hand oder Fuß betätigbares Bedienelement 15 ausgeführt, beispielsweise in Form eines Fußpedals oder eines Handschalters. Über dieses Bedienelement 15 kann der Fahrzeugführer des Fahrzeuges 2 einen Fahrerwunsch bezüglich der einzustellenden Geschwindigkeit und/oder der Beschleunigung und/oder der abrufbare Leistung an die Steuereinrichtung 12 signalisieren. In der Steuereinrichtung 12 sind dabei beispielsweise in einer Speichereinrichtung 16 die die Betriebspunkte der einzelnen Antriebskomponenten - Verbrennungskraftmaschine 7 und Elektromotor 3 - charakterisierenden Kennwerte abgespeichert, welche optimale Werte für die Bestimmung von Sollwerten für das Energieversorger 5 und/oder den Elektromotor 3 charakterisieren. Diese können in Tabellenform, als Kennlinie oder über einen Algorythmus beschrieben sein. Die Kennwerte des Energieversorgers 5 sind dabei vorzugsweise wirkungsgradoptimiert, wobei deren Festlegung in Abhängigkeit der verwendeten Energiequelle in bekannter Art und Weise erfolgen kann. Bei einem dieselelektrischen Antriebssystem sind die Kennwerte beispielsweise in einem Momenten-/Motordrehzahlkennfeld abgelegt, welches angibt, welchen Drehzahlen der

Verbrennungskraftmaschine bestimmte Leistungen oder Momente der Verbrennungskraftmaschine zugeordnet sind.

Aus einem über das Bedienelement 15 generierten Signal zur Beschreibung des Fahrerwunsches nach Änderung des Fahrverhaltens werden in der Steuereinrichtung 12 in Abhängigkeit von den in der Speichereinrichtung 16 abgelegten optimalen Kennwerten die Sollwerte S_{EV} für den Energieversorger 5 und S_{EM} für den Elektromotor gebildet. Dies erfolgt in einer sogenannten Sollwertbildnereinrichtung 17. In Abhängigkeit der in der Sollwertbildnereinrichtung 17 gebildeten Sollwerte Sₑᵥ und S_{EM} werden dann in einer Stellgrößenbildungseinrichtung 18 die Stellgrößen zur Ansteuerung der, dem Energieversorger 5 beziehungsweise dem Elektromotor 3 zugeordneten Aktoren gebildet. Die Aktoren, welche auch als Stelleinrichtungen bezeichnet werden, dienen dabei der Beeinflussung der Funktionsweise der entsprechenden Antriebskomponenten - Energieversorger 5 und/oder Elektromotor 3. Die Stellgrößen werden dabei an den Ausgängen 19.1 bis 19.n der Steuereinrichtung bei paralleler Datenübertragung ausgegeben. Bei serieller Datenübertragung ist lediglich ein Ausgang vorhanden. Über die Stelleinrichtungen kann dabei direkt das Moment und/oder die Drehzahl und/oder die Leistung der entsprechenden Antriebskomponente beeinflußt werden.

Die Sollwerte S_{EV} beziehungsweise S_{EM} werden bei gewünschter Geschwindigkeitsänderung, Beschleunigung oder Verzögerung aus dem am Bedienelement 15 vorgegebenen Fahrerwunsch gebildet und aus diesem die Stellgrößen für die Ansteuerung des Energieversorgers 5 und des Elektromotors 3. Dabei finden die zusätzlich erforderlichen Leistungsanteile, welche beispielsweise zum Antrieb von Nebenaggregaten erforderlich sind, und die Verlustleistung mit Berücksichtigung, so daß bei Vorgabe eines entsprechenden Fahrerwunsches beispielsweise nach einer bestimmten Geschwindigkeit oder einer Beschleunigung aus dem Fahrerwunsch zuerst der oder die Sollwerte S_{EM} für die Ansteuerung des Elektromotors 3 gebildet werden, wobei der Sollwert neben der für den Elektromotor unter Berücksichtigung der in der Verbindung Energieversorger 5 und Elektromotor 3 und im Elektromotor 3 anfallenden Verlustleistung zur Verfügung zu stellenden Leistung, welche der tatsächlich mechanisch vom Elektromotor abzugebenden Leistung P_{EM} entspricht, auch eine Vorgabe bezüglich der Drehzahl charakterisiert. Die tatsächlich am Elektromotor, insbesondere der Rotorabtriebswelle vorliegende Drehzahl n_{EM}, welche direkt porportional zur gewünschten Fahrgeschwindigkeit v ist, wird entsprechend dem Erfordernis nach erhöhter Geschwindigkeit, verringerter Geschwindigkeit oder Beschleunigung eingestellt.

Unter Berücksichtigung der von den Nebenaggregaten im Antriebssystem 1 beziehungsweise Fahrzeug 2 geforderten Leistungsanteile wird aus dem Fahrerwunsch und damit der vom Elektromotor 3 gewünschten theoretisch tatsächlich abzugebenden Leistung P_{EM} , welche der mechanischen Leistung entspricht, die von der Energiequelle 6 bzw. dem Energieversorger 5 bereitzustellende Leistung P_{EVsoll} bestimmt. Aus den Kennwerten zur wirkungsgradoptimierten Fahrweise ergeben sich dann für die erforderliche zur Verfügung zu stellende Leistung P_{EVsoll} die entsprechenden Sollwerte für das einzustellende Moment M_{EVsoll} beziehungsweise bei Wahl eines anderen Energieversorgers die die jeweiligen Arbeitspunkte charakterisierenden Sollwerte. Aus den Sollwerten werden dann in der Stellgrößenbildungseinrichtung 18 die Stellgrößen zur Ansteuerung der Stelleinrichtungen der einzelnen Elemente - Energieversorger 5 und/oder Elektromotor 3 - gebildet.

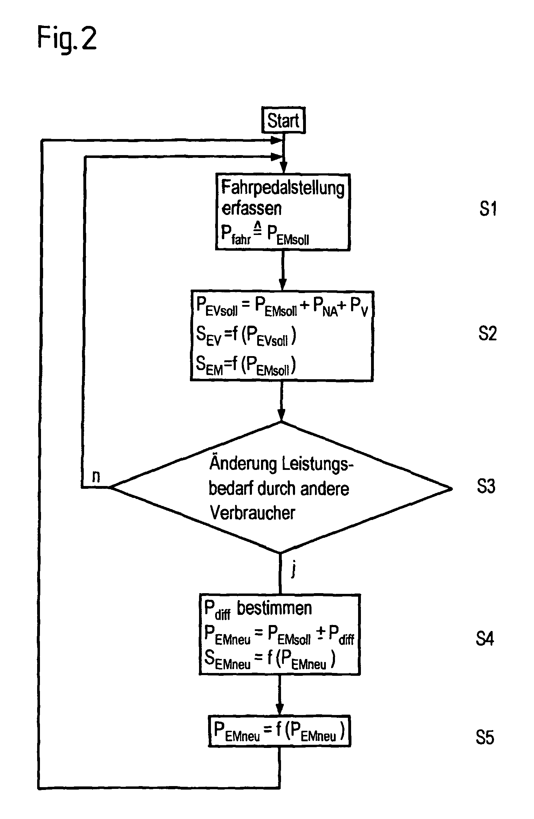

Die Figur 2 verdeutlicht anhand eines Signalflußbildes das Grundprinzip des erfindungsgemäßen Verfahrens zur Steuerung beziehungsweise Regelung des Energieversorgers 5 am Beispiel eines Dieselmotors. Dabei werden nach dem Starten des Fahrzeuges 2 in einem ersten Verfahrensschritt S1 diverse Betriebsparameter voreingestellt beziehungsweise entsprechend des Fahrerwunsches die gewünschten Sollwerte S_{EV} für den Energieversorger 5 und S_{EM} für den Elektromotor 3 aus dem Fahrerwunschsignal abgeleitet und über die Stellgrößenbildungseinrichtung 18 die entsprechenden Stellgrößen zur Ansteuerung der Aktoren und Ausgabe an den Ausgängen 19.1 bis 19.n erzeugt und ausgegeben. Als Sollwerte S_{EV} beziehungsweise S_{EM} fungieren dabei das vom Energieversorger 5 abzugebende Moment M_{EVsoll} beziehungsweise das tatsächlich mechanisch vom Elektromotor 3 oder den Elektromotoren an die Räder abzugebende Moment M_{EMsoll} und/oder die entsprechenden Drehzahlen n_{EVsoll} und n_{EMsoll} für den Energieversorger 5 beziehungsweise den Elektromotor 3. Die Sollwerte werden dabei, zumindest für den Energieversorger 5 von Optimal-Kennwerten gebildet. Dabei wird zur Bildung der Sollwerte für den Energieversorger 5 die zusätzlich an Nebenaggregate abzugebende Leistung und die im System auftretende Verlustleistung Pᵥ mit berücksichtigt, so daß sich die Sollwerte S_{EV} unter Berücksichtigung der an die Nebenaggregate abzugebenden Leistung P_{NA} und der Verluste Pᵥ ergeben. Der Fahrerwunsch in Form der Fahrleistung P_{Fahr}, welcher beispielsweise über das Bedienelement 15 vorgebbar ist, das beispielsweise in Form eines Fahrpedals ausgeführt ist, wird dabei auf die von den Elektromotoren 3 mechanisch abzugebende Leistung inclusive sämtlicher Verluste, das heißt unter Berücksichtigung der an die Nebenaggregate abgebbaren Leistung und der Verlustleistung abgebildet. Die von den Elektromotoren 3 tatsächlich mechanisch abgebbare Leistung entspricht dabei der Differenz aus der von der Verbrennungskraftmaschine 7 abgebbaren Gesamtleistung und der Summe der von den Verbrauchern, insbesondere Nebenaggregaten benötigten Leistung P_{NA} sowie der im System auftretenden Verluste Pᵥ. Die Fahrpedalstellung wird dabei auf die von den Elektromotoren 3 mechanisch abgebbare Leistung PEM, welche der Fahrleistung P_{fahr} entspricht, abgebildet. Dies ist als Verfahrensschritt S2 dargestellt. Die Steuereinrichtung 12 gibt dem Fahrzeugführer den Fahrbetrieb frei, wobei sie die momentanen Stellungswerte des Fahrpedals beziehungsweise des Bedienelementes 15 erfaßt und den Elektromotor 3 entsprechend ansteuert. In einem Schritt S3 wird vorzugsweise fortlaufend überprüft, inwieweit sich der Energiebedarf ändert bzw. es wird eine Energiebedarfsänderung erfaßt. Eine Änderung kann sich dabei zum Beispiel durch das Hinzuschalten oder das Abschalten von weiteren Stromverbrauchern wie Lampen oder Klimaanlage oder die Inbetriebnahme weiterer Nebenverbraucher ergeben. Desweiteren können sich Abweichungen von den vorgegebenen Optimalkennwerten für den Energieversorger 5 auch durch dynamische Vorgänge, die sich aus dem Regelverhalten, zum Beispiel Totzeiten oder Trägheit des Energieversorgers 5 bezüglich der Einstellung des gewünschten Betriebspunktes ergeben, zum Beispiel bei Sollwertsprüngen, ergeben. Dazu ist es erforderlich, daß ein Vergleich hinsichtlich der Kennwerte für den Energieversorger mit den als Optimal-Kennwerte vorgegebenen Sollwerten erfolgt, was beispielsweise in einer Vergleichseinrichtung 20 in der Steuereinrichtung 12 vorgenommen werden kann. Bei Feststellung einer deratigen Diskrepanz zwischen den Sollwerten S_{EVsoll} für die Kennwerte des Energieversorgers 5 und den tatsächlich sich unter Belastung einstellenden Kennwerten K_{EVaktuell}, beispielsweise M_{EVaktuell} bzw. n_{EVaktuell} wird in einem weiteren vierten Verfahrensschritt S4 diese Leistungsdifferenz P_{diff} zwischen der vom Energieversorger 5 abgebbaren Leistung P_{EVaktuell} und den tatsächlich für die den Antrieb der Nebenverbraucher erforderlichen Leistungsanteilen P_{NAaktuell} bestimmt, welche die nunmehr theoretisch an den Elektromotoren 3 abgebbare Leistung und unter Berücksichtigung der Verluste im Elektromotor die von diesen mechanisch abgebbare Leistung P_{EMneu} bestimmt. Die Ausreglung beziehungsweise Korrektur oder Kompensation der Abweichung der Kennwerte K_{EVaktuell} des Energieversorgers 5 von den Sollwerten S_{EVsoll} erfolgt dabei durch die Ansteuerung der Elektromotoren 3 derart, daß durch die veränderte Leistungsaufnahme vom Elektromotor 3 und damit auch Abgabe am Elektromotor der Energieversorger 5 wieder mit Kennwerten betrieben wird, welche dem Optimum entsprechend der Vorgabe in der Speichereinrichtung entsprechen, d.h. die Leistungsänderung nur über die Elektromotoren ausgeglichen wird. Die Optimal-Kennwerte des Energieversorgers 5 entsprechen dabei in der Regel den vor Änderung des Leistungsbedarfes. Die genannten Abweichungen von der Kennlinie beziehungsweise den Kennwerten im Optimalbereich für den Energieversorger 5 bedeuten dabei Korrekturen an den Sollwerten der Elektromotoren 3 sowohl nach oben als auch nach unten, das heißt, es kommt abhängig vom Vorzeichen der Abweichung von den optimalen Kennwerten für den Energieversorger 5 zumindest temporär zur Erhöhung oder Verminderung der von den Elektromotoren abgegebenen Leistung. Da diese Leistung jedoch nicht dem durch die Fahrpedalstellung vorgegebenen Fahrerwunsch P_{fahr} entspricht, wird diese in einem weiteren Verfahrensschritt wieder an den Fahrerwunsch angepaßt, indem gleichzeitig oder geringfügig zeitlich versetzt ein Sollwert S_{EVneu} für den Energieversorger 5 in S5 gebildet wird, welcher oder welche unter Berücksichtigung der für die Nebenabtriebe erforderlichen Leistung und die Verlustleistungen den tatsächlich gewünschten Leistungsbedarf an den Elektromotoren 3 durch Änderung der Sollwerte für den Energieversorger 5 bereitstellt, wobei diese wiederum im Optimalbereich liegen.

Ein wesentlicher Vorteil der Erfindung besteht darin, daß die Arbeitspunkteinstellung am Energieversorger 5 bei geändertem Leistungsbedarf somit primär über die Elektromotoren 3 erfolgt, da diese ein nicht so träges Regelverhalten bezüglich ihrer Arbeitspunkteinstellung aufweisen und schneller auf Änderungen des Energiebedarfes reagieren können.

Unter einer weiteren Ausgestaltung der Erfindung ist es vorgesehen, daß die Korrekturmöglichkeit durch Änderung der Leistungsabgabe an den Elektromotoren 3 aus Stabilitätsgründen begrenzt wird. Diese Begrenzung kann dabei auf einen relativen Anteil des aktuellen Sollwertes oder einen vorgegebenen Wert erfolgen. Andere Möglichkeiten sind ebenfalls denkbar.

Als Sollwerte für die Elektromotoren kommen ebenfalls Moment und Drehzahl bzw. die diese beeinflussenden Größen Stromstärke und Spannung in Betracht. Die Sollwerte des Energieversorgers bei Ausbildung als Verbrennungskraftmaschine werden vom Moment und der Drehzahl gebildet.

### Bezugszeichenliste

- 1: Antriebssystem
- 2: Fahrzeug
- 3: Elektromotor
- 4.1 - 4.n: Räder
- 5: Energieversorger
- 6: Energiequelle
- 7: Verbrennungskraftmaschine
- 8: als Generator betreibbare Maschine
- 9: elektrische Kopplung
- 10: Spannungszwischenkreis
- 11: Steuervorrichtung
- 12: Steuereinrichtung
- 13: Eingang
- 14: Einrichtung zur Vorgabe des Fahrerwunsches
- 15: Bedienelement
- 16: Speichereinrichtung
- 17: Sollwertbildnereinrichtung
- 18: Stellgrößenbildnereinrichtung
- 19.1 - 19.n: Ausgänge
- 20: Vergleichseinrichtung
- S_{EV}: Sollwert oder Werte für das Energieversorger
- S_{EM}: Sollwert oder Werte für den Elektromotor
- P_{EVsoll}: Sollwertleistung Energieversorger
- M_{EVsoll}: Sollwertmoment Energieversorger
- n_{EV}: Sollwert Drehzahl des Energieversorgers
- P_{EM}: Sollwertleistung Elektromotor △ mechanisch vom Elektromotor abgebbaren Leistung
- M_{EMsoll}: Sollwert Moment des Elektromotors
- Pdiff: Leistungsdifferenz

## Patentansprüche

1. Verfahren zur Regelung eines Energieversorgers (5) zur Bereitstellung lastabhängiger Leistung für wenigstens einen Elektromotor (3) mittels einer Steuervorrichtung (11) in einem Antriebssystem (1), wobei
1.1 die Leistungsaufnahme des Elektromotors (3) entsprechend einem mittels einem Betätigungselement vorgebbaren Fahrerwunsch durch Einspeisen von Leistung vom Energieversorger (5) geregelt wird, und
1.2 der Energieversorger (5) und der Elektromotor (3) entsprechend vorgegebener Soll-Kennwerte für einzustellende Betriebspunkte in ihrem jeweiligen Betriebskennfeld angesteuert werden, wobei
1.3 die Regelung des Energieversorgers (5) nach einem neuen Soll-Kennwert träger als die Regelung des Elektromotors (3) nach einem neuen Soll-Kennwert ist;
**dadurch gekennzeichnet, dass**
1.4 bei Abweichung der aktuellen Ist-Kennwerte der Betriebspunkte für den Energieversorger (5) von den Soll-Kennwerten aufgrund von Leistungsänderungen wenigstens eines vorgesehenen Nebenaggregates und/oder durch Ändern einer anfallenden Verlustleistung zunächst die Leistungsaufnahme des Elektromotors (3) abweichend vom Fahrerwunsch derart geändert wird, dass der Energieversorger (5) wieder entsprechend den vorgegebenen Soll-Kennwerten betrieben wird, und gleichzeitig oder zeitlich versetzt ein neuer Soll-Kennwert für den Energieversorger (5) vorgegeben wird, bei welchem der Energieversorger (5) unter Berücksichtigung der für das wenigstens eine Nebenaggregat erforderlichen Leistung und/oder der geänderten Verlustleistung den Leistungsbedarf für den Elektromotor (3) entsprechend dem Fahrerwunsch bereitstellt.

2. Verfahren nach Anspruch 1, **dadurch gekennzeichnet, daß** das Antriebssystem (1) ein elektromotorisches Antriebssystem ist und/oder der Energieversorger (5) eine Brennstoffzelle zum Bereitstellen von elektrischer Leistung für den Elektromotor (3) aufweist.

3. Verfahren nach Anspruch 1, **dadurch gekennzeichnet, daß** das Antriebssystem (1) ein elektromotorisches Antriebssystem ist und der Energieversorger (5) eine Verbrennungskraftmaschine (7) als Energiequelle (6) aufweist und einen, mechanisch mit diesem koppelbaren Generator (8), welcher über eine elektrische Kopplung (9) mit dem Elektromotor (3) elektrisch verbunden ist, umfaßt.

4. Verfahren nach einem der Ansprüche 1 bis 3, **dadurch gekennzeichnet, daß** der Stellbereich des Betätigungselementes auf die vom Elektromotor oder den Elektromotoren (3) mechanisch abgebbare Leistung P_{EM}, welche der gewünschten Fahrleistung P_{Fahr} entspricht, abgebildet wird.

5. Verfahren nach Ansprüch 4, **dadurch gekennzeichnet, daß** die vom Elektromotor (3) oder den Elektromotoren zu einem Zeitpunkt t theoretisch abgebbare Leistung (P_{EM} (t)) auf den Maximalwert des aus der am Betätigungselement den vorgebbaren Fahrerwunsch beschreibenden Größe generierten Signales abgebildet wird.

6. Verfahren nach Anspruch 5, **dadurch gekennzeichnet, daß** in Abhängigkeit vom Fahrerwunsch die Betriebsparameter voreingestellt werden, insbesondere üblicherweise gewünschte Sollwerte (S_{EM}) und (S_{EM}) für den Elektromotor (3) und den Energieversorger (5).

7. Verfahren nach einem der Ansprüche 1 bis 6, **dadurch gekennzeichnet, daß** der Vergleich der Ist-Kennwerte K_{EVaktuell} der Betriebspunkte für den Energieversorger (5) mit den Soll-Kennwerten S_{EVsoll} unter Berücksichtigung der In- oder Außerbetriebnahme von Nebenaggregaten und/oder die Überwachung der In-oder Außerbetriebnahme von Nebenaggregaten fortlaufend erfolgt.

8. Verfahren nach Anspruch 7, bei dem bei ermitteltem geändertem Energiebedarf die daraus resultierende entsprechende Leistungsdifferenz P_{diff} bestimmt und bei den entsprechenden Verfahrensschritten zur Neubestimmung von Betriebsparametern SEMneu für den Elektromotor (4) berücksichtigt wird.

9. Verfahren nach einem der Ansprüche 1 bis 8, **dadurch gekennzeichnet, daß** die veränderte Leistungaufnahme P_{diff} am Elektromotor (3) auf einen bestimmten positiven und/oder negativen Grenzwert begrenzt wird.

10. Verfahren nach Anspruch 9, bei dem bei geändertem Energiebedarf und Neubestimmung des Sollwertes oder der Sollwerte S_{EMneu} für den Elektromotor (3) eine Neubestimmung des Sollwertes oder der Sollwerte S_{EVneu} für den Energieversorger (5) durchgeführt wird und entsprechend der festgestellten positiven oder negativen Leistungsdifferenz P_{diff} mehr oder weniger Leistung durch den Energieversorger (5) zur Verfügung gestellt wird, wobei der Energieversorger (5) nach entsprechend optimierten Kennwerten betrieben wird.

11. Antriebsystem (1), insbesondere zum Durchführen eines Verfahrens nach einem der vorstehenden Ansprüche, mit
- mindestens einem Elektromotor (3),
- einem Energieversorger (5), insbesondere einer Brennstoffzelle oder einer Verbrennungskraftmachine, welche mit einem Generator koppelbar ist, zum Erzeugen von Strom für den Elektromotor (3) und
- einer Steuereinrichtung (11) zum Ansteuern des Elektromotors (3) und des Energieversorgers (5) in Abhängigkeit eines Steuersignals einer Vorrichtung zur Vorgabe eines Fahrerwunsches (14);
- eine Einrichtung zum Abbilden eines vom Elektromotor abgebbaren Leistungswertes auf die Vorrichtung zur Vorgabe eines Fahrerwunsches (14);
- Erfassungseinrchtungen für die aktuellen Kennwerte des Energieversorgers (5) charakterisierende Größen;
- die Steuereinrichtung umfaßt eine Vergleichseinrichtung zum Vergleich der aktuellen Kennwerte K_{EVaktuell} mit den optimalen Sollkennwerten S_{EVsoll} und einen Soll- bzw. Stellgrößenbildner zur Bildung einer Stellgröße zur Ansteuerung des Elektromotors (3) gemäß einer aus der Abweichung der aktuellen Kennwerte K_{EVaktuell} von den optimalen Sollkennwerten S_{EVsoll} ermittelten Leistungsdifferenz P_{diff} mit neuen Sollkennwerten S_{EMneu} und einer Stellgröße zur Ansteuerung des Energieversorgers (5) entsprechend dem tatsächlichen Fahrerwunsch für eine bestimmte Fahrleistung P_{fahr}, welche durch die mechanisch von den Elektromotoren abgebbare Leistung P_{EM} charakterisiert ist, wobei
die Regelung des Energieversorgers (5) nach einem neuen Soll-Kennwert träger als die Regelung des Elektromotors (3) nach einem neuen Soll-Kennwert ist;
**dadurch gekennzeichnet, dass** die Steuereinrichtung
bei Abweichung der aktuellen Ist-Kennwerte der Betriebspunkte für den Energieversorger (5) von den Soll-Kennwerten aufgrund von Leistungsänderungen wenigstens eines vorgesehenen Nebenaggregates und/oder durch Ändern einer anfallenden Verlustleistung zunächst die
Leistungsaufnahme des Elektromotors (3) abweichend vom Fahrerwunsch derart ändert, dass der Energieversorger (5) wieder entsprechend den vorgegebenen Soll-Kennwerten betrieben wird, und gleichzeitig oder zeitlich versetzt ein neuer Soll-Kennwert für den Energieversorger (5) vorgibt, bei welchem der Energieversorger (5) unter Berücksichtigung der für das wenigstens eine Nebenaggregat erforderlichen Leistung und/oder der geänderten Verlustleistung den Leistungsbedarf für den Elektromotor (3) entsprechend dem Fahrerwunsch bereitstellt.

## Claims

1. A method for the feedback control of an energy provider (5) for providing load-dependent power to at least one electromotor (3) by means of a control apparatus (11) in a drive system, (1),
1.1. with the power draw of the electromotor (3) being adjusted by supplying power from the energy provider (5) according to a driver's wish that is predeterminable by an actuating element, and
1.2. the energy provider (5) and the electromotor (3) being triggered according to predetermined setpoint parameters for operating points to be set in their respective characteristic operating map,
1.3. with the feedback control of the energy provider (5) after a new setpoint parameter is more sluggish than the feedback control of the electromotor (3) after a new setpoint parameter;
**characterized in that**
1.4. in the case of a deviation of the current actual parameters of the operating points for the energy provider (5) from the setpoint parameters as a result of changes in power of at least one provided ancillary unit and/or by changing an occurring power dissipation, the power draw of the electromotor (3) is changed at first by departing from the driver's wish in such a way that the energy provider (5) is operated again according to the predetermined setpoint parameters, and simultaneously or displaced in time a new setpoint parameter for the energy provider (5) is predetermined, in which the energy provider (5) provides the required power for the electromotor (3) according to the driver's wish by taking into account the power required for the at least one ancillary unit and/or the changed power dissipation.

2. A method according to claim 1, **characterized in that** the driver system (1) is an electromotive driver system and/or the energy provider (5) is a fuel cell for providing electric power to the electromotor (3).

3. A method according to claim 1, **characterized in that** the drive system (1) is an electromotive drive system and the energy provider (5) comprises an internal combustion engine (7) as a power source (6) and comprises a generator (8) which can be coupled with the same and which is electrically connected with the electromotor (3) via an electric coupling (9).

4. A method according to one of the claims 1 to 3, **characterized in that** the actuating range of the actuating element is mapped to the power P_{EM} which can mechanically be supplied by the electromotor or electromotors (3) and which corresponds to the desired driving power P_{Fahr}.

5. A method according to claim 4, **characterized in that** the power (P_{EM}(t)) which that can theoretically be supplied by the electromotor (3) or electromotors at a time t is mapped to the maximum value of the signal generated from the variable describing the predeterminable driver's wish on the actuating element.

6. A method according to claim 5, **characterized in that** the operating parameters are preset depending on the driver's wish, especially the usually desired setpoint values (S_{EM}) and (S_{EM}) for the electromotor (3) and the energy provider (5).

7. A method according to one of the claims 1 to 6, **characterized in that** the comparison of the actual parameters K_{Evaktuell} of the operating points for the energy provider (5) with the setpoint parameters S_{EVsoll} occurs continuously by taking into account the activation or deactivation of ancillary units and/or the monitoring of the activation or deactivation of ancillary units.

8. A method according to claim 7, wherein in the case of a determined changed energy requirement the thus resulting respective power difference P_{diff} is determined and is considered in the respective process steps for newly determining operating parameters S_{EMneu} for the electromotor (4).

9. A method according to one of the claims 1 to 8, **characterized in that** the changed power draw P_{diff} on the electromotor (3) is limited to a certain positive and/or negative limit value.

10. A method according to claim 9, wherein in the case of a change energy requirement and new determination of the setpoint value or the setpoint values S_{EMneu} for the electromotor (3) a new determination of the setpoint value or the setpoint values S_{Evneu} for the energy provider (5) is performed and according to the determined positive or negative power difference P_{diff} more or less power is provided by the energy provider (5), with the energy provider (5) being operated according to respectively optimized parameters.

11. A drive system (1), especially for performing the method according to one of the preceding claims, comprising
- at least one electromotor (3);
- an energy provider (5), especially a fuel cell or an internal combustion engine, which can be coupled with a generator, for generating current for the electromotor (3), and
- a control device (11) for controlling the electromotor (3) and the energy provider (5) depending on a control signal of an apparatus for predetermining a driver's wish (14);
- a device for mapping a power value that can be supplied by the electromotor to the apparatus for predetermining a driver's wish (14);
- detection devices for the variables characterizing the current parameters of the energy provider (5);
- the control device comprises a comparison device for comparing the current parameters K_{Evaktuell} with the optimal setpoint parameters S_{EVsoll} and a setpoint or actuating variable generator for generating an actuating variable for triggering the electromotor (3) according to a power difference P_{diff} determined from the deviation of the current paramters K_{EVaktuell} from
the optimal setpoint parameters S_{EVsoll} with new setpoint parameters S_{EMneu} and an actuating variable for triggering the energy provider (5) according to the actual driver's wish for a specific driving power P_{fahr} which is **characterized by** the power P_{EM} which can be supplied mechanically by the electromotors, with the feedback control of the energy provider (5) after a new setpoint parameter being more sluggish than the feedback control of the electromotor (3) after a new setpoint parameter, **characterized in that** the control device changes at first the power draw of the electromotor (3) deviating from the driver's wish in the case of a deviation of the current actual parameters of the operating points for the energy provider (5) from the setpoint parameters as a result of changes in power of at least one provided ancillary unit and/or by changing an occurring power dissipation, this being in such a way that the energy provider (5) is operated again according to the predetermined setpoint parameters, and simultaneously or displaced in time predetermines a new setpoint parameter for the energy provider (5) in which the energy provider (5) provides the required power for the electromotor (3) according to the driver's wish by taking into account the power required for the at least one ancillary unit and/or the changed power dissipation.

## Revendications

1. Procédé pour la régulation d'une source d'alimentation en énergie (5) destinée à fournir une puissance dépendante de la charge pour au moins un moteur électrique (3) au moyen d'un dispositif de commande (11) dans un système de propulsion (1), dans lequel
1.1 la puissance absorbée par le moteur électrique (3) est régulée en fonction d'un souhait du conducteur pouvant être prédéterminé au moyen d'un élément d'actionnement par la fourniture de puissance à partir de la source d'alimentation en énergie (5), et
1.2 la source d'alimentation en énergie (5) et le moteur électrique (3) sont activés en fonction de valeurs caractéristiques de consigne prédéterminées pour des points de fonctionnement à régler dans leur champ de caractéristiques de service respectif,
1.3 la régulation de la source d'alimentation en énergie (5) selon une nouvelle valeur caractéristique de consigne ayant plus d'inertie que la régulation du moteur électrique (3) selon une nouvelle valeur caractéristique de consigne ;
**caractérisé en ce que**
1.4 en cas d'écart des valeurs caractéristiques réelles actuelles des points de fonctionnement pour la source d'alimentation en énergie (5) par rapport aux valeurs caractéristiques de consigne en raison de variations de la puissance d'au moins un groupe secondaire et/ou par modification d'une puissance dissipée présente, la puissance absorbée par le moteur électrique (3) est modifiée différemment du souhait du conducteur de telle manière que la source d'alimentation en énergie (5) soit à nouveau pilotée selon les valeurs caractéristiques de consigne prédéterminées, et qu'en même temps ou avec un décalage dans le temps, une nouvelle valeur caractéristique de consigne est la source d'alimentation en énergie (5) est prédéterminée, à laquelle la source d'alimentation en énergie (5) fournit, en tenant compte de la puissance nécessaire pour l'au moins un groupe secondaire et/ou de la puissance dissipée modifiée, la puissance nécessaire au moteur électrique (3) selon le souhait du conducteur.

2. Procédé selon la revendication 1, **caractérisé en ce que** le système de propulsion (1) est un système de propulsion à moteur électronique et/ou la source d'alimentation en énergie (5) comprend une pile à combustible pour fournir la puissance électrique au moteur électrique (3).

3. Procédé selon la revendication 1, **caractérisé en ce que** le système de propulsion (1) est un système de propulsion à moteur électrique et la source d'alimentation en énergie (5) comprend un moteur à combustion interne (7) servant de source d'énergie (6) et un générateur (8) pouvant être couplé mécaniquement à celui-ci, qui est relié électriquement par un couplage électrique (9) au moteur électrique (3).

4. Procédé selon l'une des revendications 1 à 3, **caractérisé en ce que** la plage de réglage de l'élément d'actionnement est représentée en relation avec la puissance P_{EM} pouvant être délivrée mécaniquement par le moteur électrique ou les moteurs électriques (3) qui correspond aux performances de conduite P_{conduite} souhaitées.

5. Procédé selon la revendication 4, **caractérisé en ce que** la puissance pouvant théoriquement être délivrée par le moteur électrique (3) ou les moteurs électriques à un instant t (P_{EM}(t)) est représentée en relation avec la valeur maximale du signal généré à partir de la grandeur décrivant le souhait pouvant être prédéterminé du conducteur au niveau de l'élément d'actionnement.

6. Procédé selon la revendication 5, **caractérisé en ce que** les paramètres de fonctionnement sont préréglés en fonction du souhait du conducteur, en particulier les valeurs de consigne habituellement souhaitées (S_{EM} et (S_{EM}) pour le moteur électrique (3) et la source d'alimentation en énergie (5).

7. Procédé selon l'une des revendications 1 à 6, **caractérisé en ce que** la comparaison des valeurs caractéristiques réelles K_{EVactuel} des points de fonctionnement pour la source d'alimentation en énergie (5) avec les valeurs caractéristiques de consigne S_{EVconsigne} est réalisée de façon continue en tenant compte de la mise en service et hors service des groupes secondaires et/ou de la surveillance de la mise en service et hors service des groupes secondaires.

8. Procédé selon la revendication 7, dans lequel, à la consommation d'énergie modifiée déterminée, la différence de puissance correspondante P_{diff} est déterminée et prise en compte dans les étapes correspondante du procédé pour redéfinir les paramètres de fonctionnement S_{EMnouveau} pour le moteur électrique (4).

9. Procédé selon l'une des revendications 1 à 8, **caractérisé en ce que** la puissance absorbée modifiée P_{diff} du moteur électrique (3) est limitée à une certaine valeur limite positive et/ou négative.

10. Procédé selon la revendication 9, dans lequel, lorsque la consommation d'énergie change et la ou les valeurs de consigne sont modifiées S_{EMnouveau}, la valeur de consigne ou les valeurs de consigne S_{EVnouveau} pour la source d'alimentation en énergie (5) sont redéfinies pour le moteur électrique (3) et en fonction de la différence de puissance P_{diff} positive ou négative constatée, plus ou moins de puissance est fournie par la source d'alimentation en énergie (5), laquelle la source d'alimentation en énergie (5) est pilotée selon des valeurs caractéristiques optimisées en conséquence.

11. Système de propulsion (1), en particulier pour la mise en oeuvre d'un procédé selon l'une des revendications précédentes, avec :
- au moins un moteur électrique (3),
- une source d'alimentation en énergie (5), en particulier une pile à combustible ou un moteur à combustion interne, pouvant être couplée à un générateur pour produire de l'électricité pour le moteur électrique (3) et
- un dispositif de commande (11) pour l'activation du moteur électrique (3) et de la source d'alimentation en énergie (5) en fonction d'un signal de commande d'un dispositif pour la définition d'un souhait du conducteur (14) ;
- un dispositif pour visualiser une valeur de puissance pouvant être délivrée par le moteur électrique sur le dispositif de définition d'un souhait du conducteur (14) ;
- des dispositifs de saisie des grandeurs caractérisant les valeurs caractéristiques actuelles de la source d'alimentation en énergie (5) ;
- le dispositif de commande comprend un dispositif comparateur destiné à comparer les valeurs caractéristiques actuelles K_{EVactuel} avec les valeurs caractéristiques de consigne optimales S_{Evconsigne} et un calculateur de valeurs de consigne ou de réglage pour constituer une grandeur de réglage pour l'activation du moteur électrique (3) selon une différence de puissance P_{diff} déterminée à partir de l'écart entre les valeurs caractéristiques actuelles K_{Evactuel} et les valeurs caractéristiques de consigne optimales S_{EVconsigne} avec de nouvelles grandeurs caractéristiques de consigne S_{EMnouveau} et une nouvelle grandeur de réglage pour l'activation de la source d'alimentation en énergie (5) selon le souhait effectif du conducteur de performances de conduite P_{conduite} données, qui est **caractérisée par** la puissance P_{EM} pouvant être délivrée par le moteur électrique,
dans lequel la régulation de la source d'alimentation en énergie (5) selon une nouvelle valeur caractéristique de consigne est plus inerte que la régulation du moteur électrique (3) selon une nouvelle valeur caractéristique de consigne, **caractérisé en ce qu'**en cas d'écart entre les valeurs caractéristiques actuelles des points de fonctionnement pour la source d'alimentation en énergie (5) et les valeurs caractéristiques de consigne en raison de variations de puissance d'au moins un groupe secondaire prévu et/ou de la modification d'une puissance dissipée présente, le dispositif de commande modifie d'abord la puissance absorbée par le moteur électrique (3) différemment du souhait du conducteur, de telle manière que la source d'alimentation en énergie (5) fonctionne à nouveau selon les valeurs caractéristiques de consigne prédéterminées, et délivre qu'en même temps ou avec un décalage dans le temps une nouvelle valeur caractéristique de consigne pour la source d'alimentation en énergie (5), à laquelle la source d'alimentation en énergie (5) fournit, compte tenu de la puissance nécessaire pour l'au moins un groupe secondaire et/ou de la puissance dissipée modifiée, la puissance nécessaire au moteur électrique (3) selon le souhait du conducteur.
